# EUROPEAN PATENT APPLICATION

(11) **EP 4 125 019 A1**
(43) Date of publication of application: **01.02.2023**
(21) Application number: 22186940.7
(22) Date of filing: 26.07.2022
(51) Int. Cl.: G06Q 20/18, G06Q 20/20, G07G 1/00, G07G 1/14, G06V 20/52

(54) **INFORMATION PROCESSING PROGRAM, INFORMATION PROCESSING METHOD, AND INFORMATION PROCESSING APPARATUS**

(30) Priority: 30.07.2021 JP 2021126307
(71) Applicant: FUJITSU LIMITED, Kawasaki-shi, Kanagawa 211-8588 (JP)
(72) Inventor: SUZUKI, Genta, Kawasaki-shi, Kanagawa, 211-8588 (JP)
(74) Representative: Hoffmann Eitle

(57) **Abstract**

An information processing program causes a computer to execute a process including, specifying, from a plurality of images taken by one or more camera devices, a person who visits a store and a first object that contains one or more first commodity products and is used by the person, specifying, from the plurality of images, a location of the person in the store, specifying, based on the location of the person and a location of each of a plurality of terminals in the store, a first terminal in which the person uses from among the plurality of terminals, associating the one or more first commodity products contained in the first object with the first terminal, and performing authentication processing of the one or more first commodity products contained in the first object by using the certificate information.

## Description

### FIELD

The embodiments discussed herein are related to an information processing program, an information processing method, and an information processing apparatus.

### BACKGROUND

In retail stores, in order to prevent checkout counters from being crowded, introduction of a system in which customers scan and register commodity products and perform checkout themselves is being facilitated. Furthermore, in recent years, introduction of a system in which customers scan commodity products at places other than checkout counters, for example, at the places of sales floors where each of the commodity products is picked up into shopping baskets by the customers by using applications installed in terminals lent inside stores of the retail stores has been started. In such a system for customers to scan commodity products themselves, there is a need to detect a scan omission of a commodity product in order to detect a fraudulent behavior, such as shoplifting.

In contrast, as a system for detecting a fraudulent behavior of a customer at retail stores, a system for detecting a suspicious behavior or a fraudulent behavior, such as shoplifting, of a customer by using, for example, a monitoring camera placed in a store has been developed.
Patent Document 1: U.S. Patent No. 8448858
Patent Document 2: U.S. Patent Application Publication No. 2016/0189277
Patent Document 3: Japanese Laid-open Patent Publication No. 2020-135422
Patent Document 4: Japanese Laid-open Patent Publication No. 2013-041354

However, in a system for customers to scan commodity products themselves, a commodity product scan need not always be performed at each of the sales floors of the commodity products, but may be performed at any location before calculation of a payment amount of commodity products to be purchased is performed by a bill payment terminal. Accordingly, it is conceivable that, at the time of payment performed by a bill payment terminal, for example, a store clerk visually specifies the commodity products contained in the shopping basket and determines whether a payment is appropriately made with respect to the specified commodity products. However, the shopping basket need not always be carried to an area in which the bill payment terminal is disposed at the time of the payment, and thus, the commodity products contained in the shopping basket are not able to be specified, so that it is conceivable that it is not able to or it is difficult to detect a scan omission of a commodity product.

Accordingly, it is an object in one aspect of an embodiment of the present invention to provide, in a system for customers to scan commodity products themselves, an information processing program, an information processing method, and an information processing apparatus capable of improving accuracy of detecting a scan omission of a commodity product.

### SUMMARY

According to an aspect of an embodiment, an information processing program that causes a computer to execute a process comprising, specifying, from a captured image, a person who visits a store and a basket that is used by the person, specifying, based on positional information on the person and positional information on each of a plurality of bill payment terminals, a first bill payment terminal in which the person pays a bill from among the plurality of bill payment terminals, and associating first commodity products contained in the basket with the first bill payment terminal.

According to an aspect of an embodiment, an information processing program that causes a computer to execute a process comprising, specifying, from a captured image, a first group constituted of a plurality of persons who visit a store, specifying, from the image, a basket that is used by the first group, specifying, based on positional information on a first person who belongs to the first group and positional information on each of a plurality of bill payment terminals, a first bill payment terminal in which the first person pays a bill from among the plurality of bill payment terminals, and associating first commodity products contained in the basket carried by a second person who belongs to the first group with the first bill payment terminal.

### BRIEF DESCRIPTION OF DRAWINGS

FIG. 1 is a diagram illustrating a configuration example of a fraud detection system according to a first embodiment;
FIG. 2 is a diagram illustrating an example of purchase of commodity products made by performing self-scanning according to the first embodiment;
FIG. 3 is a diagram illustrating an example of a payment made at a self-service checkout counter according to the first embodiment;
FIG. 4 is a diagram illustrating a configuration example of a fraud detection apparatus 10 according to the first embodiment;
FIG. 5 is a diagram illustrating an example of data stored in bill payment information 33 according to the first embodiment;
FIG. 6 is a diagram illustrating an example of a fraud detection process according to the first embodiment;
FIG. 7 is a diagram illustrating an example of object detection and skeleton detection according to the first embodiment;
FIG. 8 is a diagram illustrating an example of specifying a group according to the first embodiment;
FIG. 9 is a diagram illustrating an example of a dedicated camera for capturing images of baskets according to the first embodiment;
FIG. 10 is a diagram illustrating an example of an alert notification according to the first embodiment;
FIG. 11 is a flowchart illustrating the flow of the fraud detection process according to the first embodiment; and
FIG. 12 is a diagram illustrating an example of a hardware configuration.

### DESCRIPTION OF EMBODIMENTS

Preferred embodiments of the present invention will be explained with reference to accompanying drawings. Furthermore, the present embodiment is not limited by the embodiments. In addition, each of the embodiments can be used in any appropriate combination as long as they do not conflict with each other.

### First Embodiment

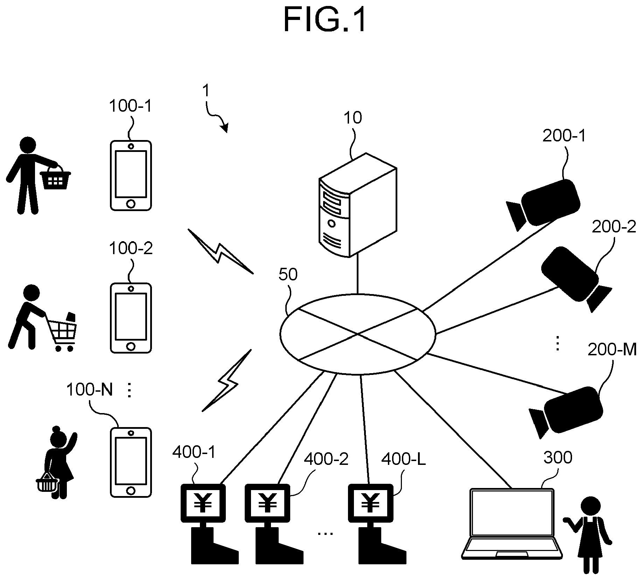

First, a fraud detection system for implementing the present embodiment will be described. FIG. 1 is a diagram illustrating a configuration example of the fraud detection system according to the first embodiment. As illustrated in FIG. 1, a fraud detection system 1 is a system in which the fraud detection apparatus 10, and user terminals 100-1 to 100-N (N is any integer. Hereinafter, collectively referred to as a "user terminal 100") are connected via a network 50 so as to be communicated with each other.

Furthermore, the fraud detection apparatus 10 is also connected to camera devices 200-1 to 200-M (M is any integer. Hereinafter, collectively referred to as a "camera device 200") and a store clerk terminal 300 via the network 50 so as to be communicated with each other. In addition, the fraud detection apparatus 10 is also connected to bill payment terminals 400-1 to 400-L (L is any integer. Hereinafter, collectively referred to as a "bill payment terminal 400") via the network 50 so as to be communicated with each other.

Various kinds of communication network, such as an intranet, that is used inside of, for example, a store of a retail store may be used for the network 50 irrespective of a wired or wireless manner. Furthermore, instead of a single network, the network 50 may be constituted of, for example, an intranet and the Internet by way of a network device, such as a gateway, or another device (not illustrated). Furthermore, the inside of the store of the retail store is not limited to indoors, but may include outdoors within the site of the retail store.

The fraud detection apparatus 10 is an information processing apparatus, such as a desktop personal computer (PC), a notebook PC, or a server computer, that is installed, for example, inside the store of the retail store and that is used by store staff, an administrator, or the like.

The fraud detection apparatus 10 receives, from the camera device 200, a plurality of images obtained by capturing, by the camera device 200, a predetermined image capturing range, such as the inside of the store or the site of the retail store. Furthermore, the plurality of images mentioned here are, in a precise sense, video images captured by the camera device 200, that is, a series of frames of a moving image.

Furthermore, the fraud detection apparatus 10 specifies, from a captured image by using an existing object detecting technique, a customer who visits the store (hereinafter, sometimes simply referred to as a "person") or a shopping basket carried by the person (hereinafter, sometimes simply referred to as a "basket"). Furthermore, the fraud detection apparatus 10 may generate, from the captured image by using an existing skeleton detection technique, skeleton information on the specified person, estimate a pose of the person, and specify a motion of the person putting a commodity product into the basket or the like.

Furthermore, on the basis of positional information on a person and positional information on each of the plurality of the bill payment terminals 400-1 to 400-L, the fraud detection apparatus 10 specifies the bill payment terminal 400 in which the person makes a payment. Furthermore, the fraud detection apparatus 10 associates the basket that is used by the person with the bill payment terminal 400 in which the person makes the payment.

Then, the fraud detection apparatus 10 determines whether or not an unpaid commodity product is present on the basis of a difference between the number of commodity products contained in the basket and the number of commodity products that are input to the bill payment terminal 400. If an unpaid commodity product is present, the fraud detection apparatus 10 notifies the store clerk terminal 300 of an alert.

Furthermore, FIG. 1 illustrates the fraud detection apparatus 10 as a single computer; however, the fraud detection apparatus 10 may be a distributed computing system constituted by a plurality of computers. Furthermore, the fraud detection apparatus 10 may be a cloud computer device managed by a service provider that provides a cloud computing service.

The user terminal 100 is an information processing terminal that is used by each of the customers to scan a barcode of each of the commodity products by themselves in order to purchase the commodity products and register the purchased commodity products. The user terminal 100 may be a mobile terminal, such as a smartphone or a tablet personal computer (PC), owned by the customer, or a dedicated terminal that is lent inside the store. The user terminal 100 has, installed therein in advance, an application for, for example, scanning and registering commodity products.

The camera devices 200 are monitoring cameras installed, for example, the inside of the store or the site of the retail store. Furthermore, FIG. 1 illustrates a plurality of the camera devices 200; however, for example, it may be possible to use a single piece of the camera device 200 that captures an image of a site in the vicinity of a self-service checkout counter area in which the bill payment terminal 400 is installed. A video image captured by the camera device 200 is transmitted to the fraud detection apparatus 10.

The store clerk terminal 300 may be a mobile terminal, such as a smartphone or a tablet PC, carried by a store clerk of the retail store, or may be an information processing apparatus, such as a desktop PC or a notebook PC, installed at a predetermined position disposed inside the store. The store clerk terminal 300 receives an alert from the fraud detection apparatus 10 in the case where a fraudulent behavior, such as a scan omission of a commodity product, performed by a customer is detected by the fraud detection apparatus 10. Furthermore, a plurality of the store clerk terminal 300 may be present for, for example, each of the store clerks of the store, but the terminal that receives a notification of the alert may be limited to the terminal that is carried by, for example, a store clerk responsible for security positioned in the vicinity of the self-service checkout counter area.

The bill payment terminal 400 is a self-service checkout terminal that is used for a customer to pay a bill of the commodity products by himself or herself. The bill payment terminal 400 receives information on the commodity products to be purchased that have been registered via the user terminal 100. Then, the bill payment terminal 400 receives the payment of the cost of the commodity products to be purchased from the customer by cash, a credit card, electronic money, or the like.

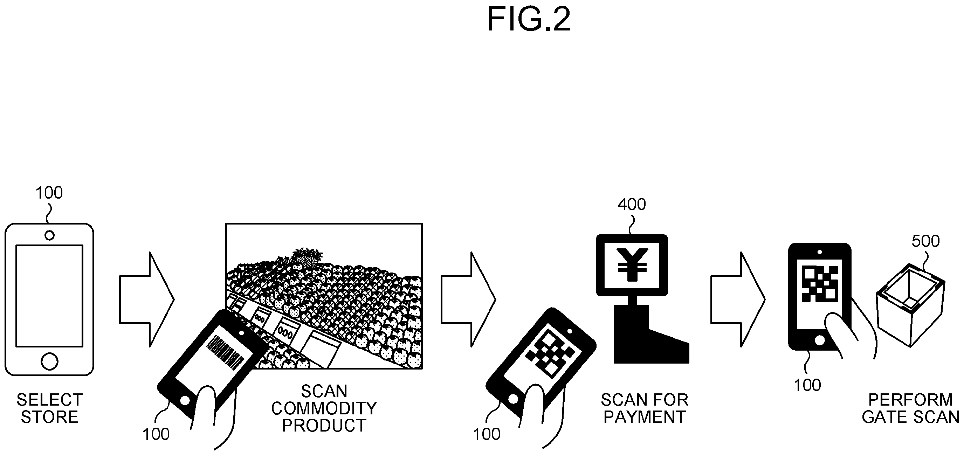

In the following, a method in which a customer purchases commodity products by scanning and registering commodity products by himself or herself (hereinafter, sometimes referred to as "self-scanning") will be described with reference to FIG. 2. FIG. 2 is a diagram illustrating an example of a purchase of commodity products made by performing self-scanning according to the first embodiment.

As illustrated in FIG. 2, first, a customer selects a visited store through an application displayed on the user terminal 100. Then, the customer picks up the commodity products to be purchased and reads, for example, a barcode of each of the commodity products, a barcode attached to a commodity product shelf for each of the commodity products, or the like by using the user terminal 100 (hereinafter, sometimes referred to as a "commodity product scan"). As a result, the commodity products to be purchased are registered in the application.

Then, the customer scans a payment code displayed on a display unit of, for example, the bill payment terminal 400 by using the user terminal 100. Then, by making a payment of an amount displayed on a payment amount screen of the bill payment terminal 400, the purchase of the commodity products has been completed. Furthermore, the customer is able to exit the store by causing a gate reader 500 or the like installed at the exit of the store or the like to read a payment completion code displayed on the user terminal 100. Furthermore, although not illustrated in FIG. 1, the gate reader 500 is a code reader connected to the fraud detection apparatus 10 via the network 50 so as to be able to communicate with each other.

In the above, a purchase of commodity products by performing self-scanning has been described with reference to FIG. 2. However, in self-scanning, for example, a customer is able to put the commodity products into a basket without performing a commodity product scan and is able to avoid a payment without passing through a self-service checkout counter. Alternatively, by scanning only some of commodity products to be purchased and paying the bill of only the scanned commodity products at the self-service checkout counter, a customer is consequently able to avoid a payment of some of the commodity products. In particular, a fraudulent behavior is likely to be easily found by a store clerk in the case where the number of items of the commodity products is small; however, for example, it is difficult to find a fraudulent behavior by a store clerk or the like in the case where the number of items of the commodity products is large and some of the commodity products are not scanned.

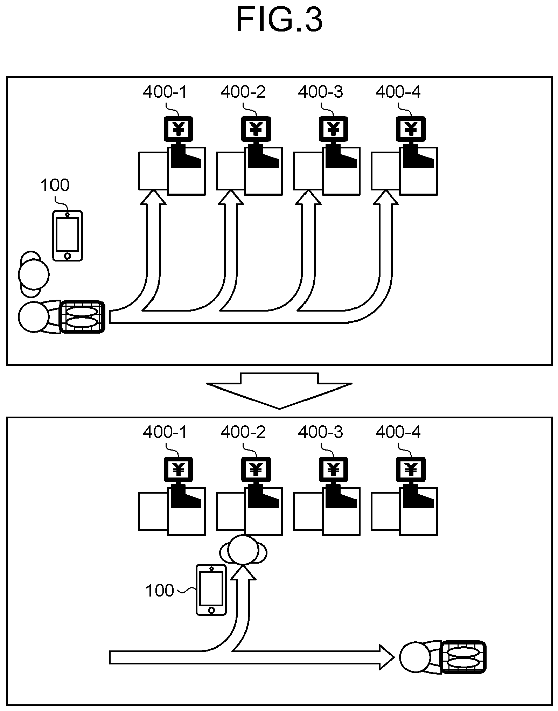

In particular, a shopping basket need not always be carried to the area in which the bill payment terminal 400 is disposed at the time of payment, so that, in a case of, for example, a group customer as illustrated in FIG. 3, it is not able to specify the commodity products contained in the shopping basket and it is thus difficult to detect a scan omission of a commodity product.

FIG. 3 is a diagram illustrating an example of a payment made at a self-service checkout counter according to the first embodiment. As illustrated in FIG. 3, in a case of a group customer, there may be a case in which a person who makes a payment at the bill payment terminal 400 and a person who carries a basket are different. In this case, the person who carries the basket exhibits a behavior, such as a motion of putting the commodity products into a bag, at a position away from the bill payment terminal 400 during a period of time for which a person who makes a payment is paying a bill.

At this time, for example, it is possible to transmit information on the commodity products that are in the course of a payment process performed by the bill payment terminal 400 to the store clerk terminal 300 that is checked by a store clerk who monitors the self-service checkout counter area. However, it is not able to specify, only by the information, whether the commodity product that is in the course of a payment process is which commodity product contained in the shopping basket, so that it is not easy to detect a fraudulent behavior, such as a scan omission of a commodity product.

### Functional configuration of the fraud detection apparatus 10

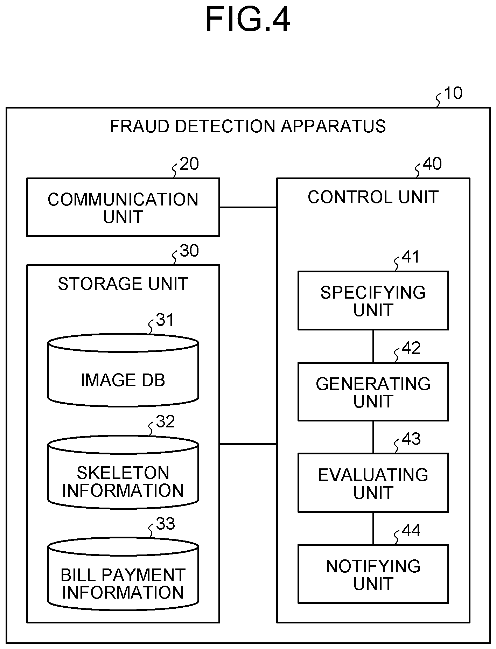

In the following, a functional configuration of the fraud detection apparatus 10 will be described. FIG. 4 is a diagram illustrating a configuration example of the fraud detection apparatus 10 according to the first embodiment. As illustrated in FIG. 4, the fraud detection apparatus 10 includes a communication unit 20, a storage unit 30, and a control unit 40.

The communication unit 20 is a processing unit that controls communication with another device, such as the user terminal 100 or the camera device 200, and is, for example, a communication interface, such as a universal serial bus (USB) interface or a network interface card.

The storage unit 30 has a function for storing various kinds of data and a program executed by the control unit 40 and is implemented by, for example, a storage device, such as a memory or a hard disk. The storage unit 30 stores therein an image DB 31, skeleton information 32, the bill payment information 33, and the like.

The image DB 31 stores therein a plurality of captured images that are a series of frames captured by the camera device 200. Furthermore, the image DB 31 is able to store therein positional information on a person or an object that is included in the image and that is specified with respect to the subject captured image.

The skeleton information 32 stores therein skeleton information on the person specified from the captured image that is captured by the camera device 200. A process of generating the skeleton information will be described later. Furthermore, the process to be performed on the person specified from the captured image is performed by processing the skeleton information having a smaller amount of information, instead of directly processing the captured image, so that it is possible to reduce a processing load applied to the fraud detection apparatus 10. However, if the fraud detection apparatus 10 does not use the skeleton information, the fraud detection apparatus 10 need not generate and store the skeleton information 32 and the data thereon need not be included in the configuration of the fraud detection apparatus 10.

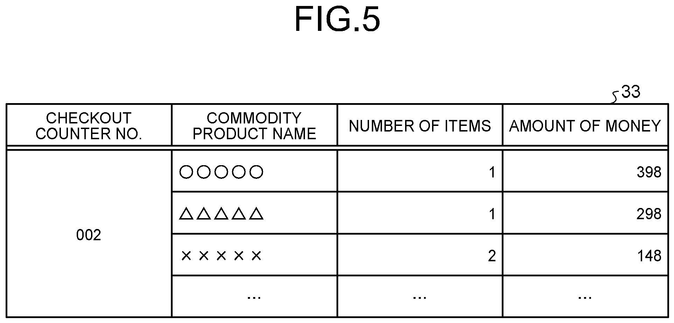

The bill payment information 33 stores therein information related to a payment of commodity products purchased by performing self-scanning. FIG. 5 is a diagram illustrating data stored in the bill payment information 33 according to the first embodiment. As illustrated in FIG. 5, the bill payment information 33 stores therein categories, such as "checkout counter No." that is an identifier for uniquely identifying the bill payment terminal 400 in which a payment process has been performed, "commodity product name" indicating the name of each of the commodity products that have been paid, "number of items" indicating the number of items for each commodity product, "amount of money" indicating a price of the associated commodity product, and the like. In addition, in the example illustrated in FIG. 5, only a piece of bill payment information is indicated; however, of course, a plurality of pieces of bill payment information are stored in the bill payment information 33. Accordingly, the bill payment information 33 may also store therein the date and time at which a payment is made. In addition, the bill payment information 33 is able to further store therein an identifier that uniquely indicates each of associated persons, baskets, and groups and is able to store therein each of the association relationships. In addition, it is possible to store, in the bill payment information 33, for example, an identifier for an image in which a person or a basket is captured and associate the image with the captured images that are stored in the image DB 31.

Furthermore, the above described information stored in the storage unit 30 is only an example and the storage unit 30 is able to store therein various kinds of information other than the above described information.

The control unit 40 is a processing unit that manages the entirety of the fraud detection apparatus 10 and is, for example, a processor. The control unit 40 includes a specifying unit 41, a generating unit 42, an evaluating unit 43, and a notifying unit 44. Moreover, each of the processing units is an example of an electronic circuit included by the processor or an example of a process executed by the processor.

The specifying unit 41 specifies, from the captured image captured by the camera device 200, a person who visits a store and an object that is used by the person. The object may include, for example, a basket, a commodity product, the user terminal 100, or the bill payment terminal 400. Moreover, a process of specifying the person may include a process of tracking, from the captured images that are captured at different time, the same person at different time on the basis of the appearance and an amount of movement of the person.

Furthermore, the specifying unit 41 specifies the bill payment terminal 400 in which a person pays a bill from among the plurality of the bill payment terminals 400. This process is performed on the basis of, for example, the positional information on the person included in the captured image that has been captured by the camera device 200 and the positional information on each of the plurality of bill payment terminals. Then, the specifying unit 41 associates the commodity products contained in the basket that is used by the person with the bill payment terminal 400 in which the person pays the bill.

Furthermore, the specifying unit 41 specifies, from the captured image that has been captured by the camera device 200, a group constituted of a plurality of persons who visit the store and a basket that is used by the group. Furthermore, the specifying unit 41 specifies the bill payment terminal 400 in which the first person who belongs to the group pays a bill from among the plurality of the bill payment terminals 400. Then, the specifying unit 41 associates the commodity products contained in the basket carried by the second person who belongs to the same group as the first person with a first bill payment terminal in which the first person pays a bill. Moreover, a process of specifying the group may include a process of specifying a group on the basis of a position and a movement vector of each of bounding boxes of the respective plurality of persons included in, for example, the captured image.

Furthermore, a process of specifying the basket from the captured image may include a process of specifying the basket on the basis of an association relationship obtained from the coordinates on the captured images captured by, for example, the camera device 200-1 that captures an image of a site in the vicinity of the self-service checkout counter area and the camera device 200-2 that is used to capture an image of a basket from a position above the person's head. More specifically, for example, if a person enters a coordinate region that is included in the captured image captured by the camera device 200-1 and that indicates an image capturing range of the camera device 200-2, the basket may be specified by controlling the camera device 200-2 so as to capture an image of the basket from a position above the person's head. As a result, the camera device 200 is able to clearly capture an image of the basket at the time at which, for example, a person enters the self-service checkout counter area in order to pay a bill.

Furthermore, on the basis of, for example, the specified object and the skeleton information on the person generated by the generating unit 42, the specifying unit 41 may detect and specify a predetermined motion, such as a motion of a person registering a commodity product to be purchased to the user terminal 100. As a result, the fraud detection apparatus 10 is able to limit the person corresponding to a processing target for fraud detection only to the target person for self-scanning who uses the user terminal 100.

The generating unit 42 generates, from the captured image that has been captured by the camera device 200, the skeleton information on the person specified by the specifying unit 41. Moreover, in the case where the fraud detection apparatus 10 does not use the skeleton information, the generating unit 42 need not be included in the configuration of the fraud detection apparatus 10.

The evaluating unit 43 determines whether or not an unpaid commodity product is present on the basis of a difference between the number of first commodity products that are contained in a basket and the number of second commodity products that have been input to the bill payment terminal 400. The process of determining whether or not an unpaid commodity product is present may include a process of, for example, cutting out the image of the basket from the captured image as a partial image, estimating the amount of materials of the first commodity products from the partial image, and determining whether or not an unpaid commodity product is present on the basis of the amount of materials and the number of second commodity products. Moreover, if the person uses a plurality of baskets, the evaluating unit 43 determines whether or not an unpaid commodity product is present assuming that the commodity products contained in the plurality of baskets are collectively regarded as the number of the first commodity products or the amount of materials.

Moreover, the number of items may be counted by detecting the commodity products using an object detection technology, such as You Only Look Once (YOLO), as estimation of the amount of materials of the commodity products contained in the basket, or may be categorized into classifications that indicate the amount of materials in stages using, for example, Full, Mid, Low, or the like. Furthermore, the amount of materials of the commodity products may be estimated by inputting the partial image of the basket to a machine training model that is generated by performing machine training by using, for example, the image of the basket as a feature amount and the amount of materials of the commodity products contained in the basket as a correct answer label. Moreover, for the machine training, an image classifier, such as residual network (ResNet), may be used.

Furthermore, the evaluating unit 43 may receive, from the bill payment terminal 400, the bill payment information on the second commodity products that have been input to the bill payment terminal 400 and determine whether or not an unpaid commodity product is present on the basis of a difference between the number of the first commodity products that are contained in the basket and the number of paid items of the second commodity products based on the bill payment information. Moreover, the received bill payment information may be the bill payment information on the second commodity products registered via the user terminal 100 that is used to register, by the customer by himself or herself, the commodity products to be purchased.

The notifying unit 44 sends a notification of an alert on the basis of an evaluation result obtained by the evaluating unit 43 when an unpaid commodity product is present. A process of sending a notification of the alert may include a process of notifying the store clerk terminal 300 of, for example, a partial image of a basket or the commodity products contained in the basket included in the captured image and the bill payment information on the commodity products that have been input to the bill payment terminal 400. Moreover, the notifying unit 44 may notify the store clerk terminal 300 of the partial image of the basket or the commodity products contained in the basket and the bill payment information on the commodity products regardless whether or not an unpaid commodity product is present. As a result, the store clerk is able to detect a scan omission of a commodity product by visually comparing the commodity products contained in the basket to the paid commodity products.

### Details of functions

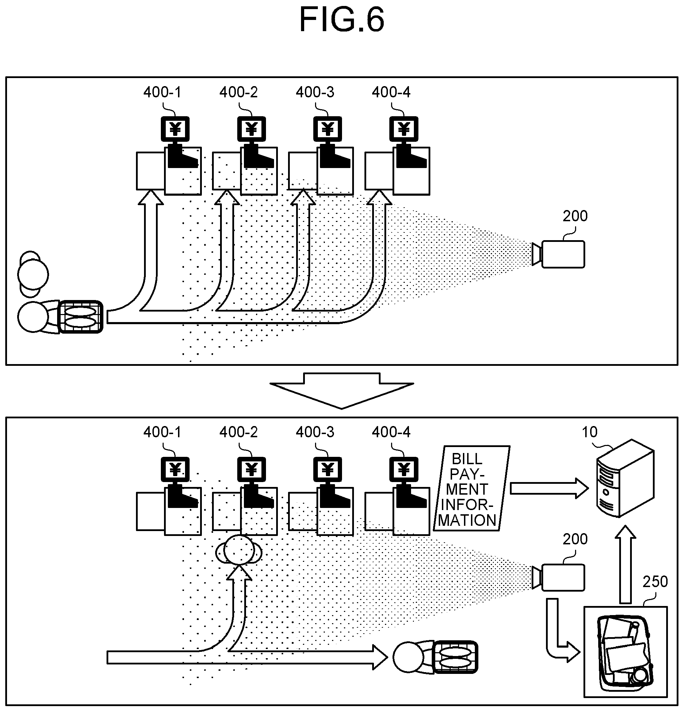

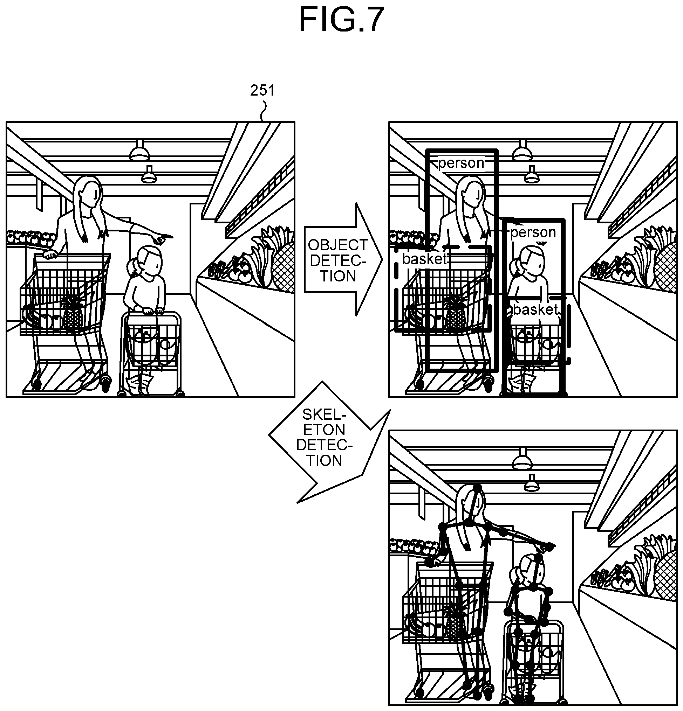

In the following, a fraud detection process performed by the fraud detection apparatus 10 functioning as an actor will be described with reference to FIGS. 6 to 9. FIG. 6 is a diagram illustrating an example of the fraud detection process according to the first embodiment. As illustrated in the upper side of FIG. 6, the inside of the store is captured by the camera device 200, and the fraud detection apparatus 10 specifies persons and a basket that is used by the persons from the captured image that has been captured by the camera device 200. Moreover, in the example illustrated in FIG. 6, only a single piece of the camera device 200 that captures a site in the vicinity of the self-service checkout counter area in which the bill payment terminal 400 is installed; however, the fraud detection apparatus 10 is able to specify persons and objects from the captured images captured by the camera devices 200 that are installed various positions in the store. A method of specifying persons or objects from a captured image will be described with reference to FIG. 7.

FIG. 7 is a diagram illustrating an example of object detection and skeleton detection according to the first embodiment. As illustrated on the upper right part of FIG. 7, the fraud detection apparatus 10 detects and specifies persons and baskets from a captured image 251 by using, for example, an existing object detection algorithm. The existing object detection algorithm mentioned here is an object detection algorithm using, for example, deep training, such as Faster Convolutional Neural Network (R-CNN). Furthermore, the existing object detection algorithm may be an object detection algorithm, such as YOLO or Single Shot Multibox Detector (SSD).

Furthermore, other than the persons or the baskets, for example, commodity products, the user terminal 100, or clothes of a person may be detected from the captured image. As a result, the fraud detection apparatus 10 is able to detect a state in which, for example, a person does not perform self-scanning even though the person has the user terminal 100. Furthermore, the fraud detection apparatus 10 is able to exclude, for example, a person who does not have the user terminal 100 or a person who wears a uniform of a store clerk from the target of the fraud detection process. In this way, the fraud detection apparatus 10 is able to reduce the processing load by excluding the persons who do not need to be subjected to fraud detection from the processing target.

Furthermore, the fraud detection apparatus 10 is able to determine an age of the person specified from the captured image by using, for example, an existing algorithm, and specify a relationship, such as a parent and child relationship, between the persons.

Furthermore, as illustrated on the lower right part of FIG. 7, the fraud detection apparatus 10 may detect skeletons of the person specified from the captured image 251 by using, for example, an existing skeleton estimation algorithm. The existing skeleton estimation algorithm mentioned here is a skeleton estimation algorithm using, for example, deep training, such as Human Pose estimation.

Then, the fraud detection apparatus 10 may specify the motion of the person by using an existing pose estimation algorithm on the basis of the detected object or skeleton information. The existing pose estimation algorithm mentioned here is a pose estimation algorithm using deep training, such as DeepPose or OpenPose.

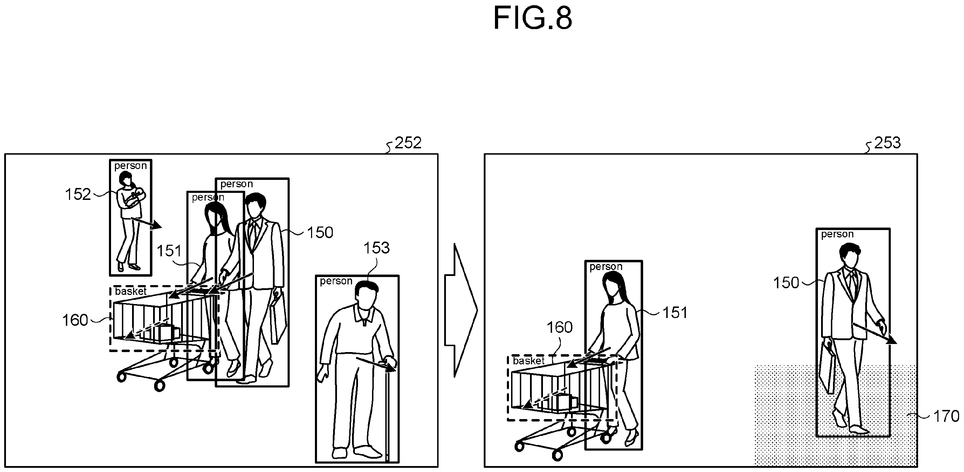

Furthermore, the fraud detection apparatus 10 specifies a group that is constituted of a plurality of persons on the basis of the relationship between the specified persons. FIG. 8 is a diagram illustrating an example of specifying of a group according to the first embodiment. As illustrated on the left side of FIG. 8, the fraud detection apparatus 10 specifies a group on the basis of the position and the movement vector of each of the bounding boxes of the associated persons or the basket specified from a captured image 252 of the inside of the store captured by the camera device 200.

For example, if each of the bounding boxes of the associated persons and the basket moves in the same direction in a predetermined time period while keeping a distance within a predetermined distance, the fraud detection apparatus 10 specifies that the persons and the basket are the same group. In the example illustrated in FIG. 8, it is determined that the bounding boxes of a person 150, a person 151, and a basket 160 are moving in the same direction in a predetermined time period while keeping the distance within the predetermined distance, so that it is determined that the group is the same group. In contrast, it is determined that each of a person 152 and a person 153 is a single customer who does not belong to the group. Moreover, a state in which the bounding boxes are moving in the same direction in the predetermined time period while keeping the distance within the predetermined distance is able to be determined from the position and the amount of movement of each of the bounding boxes that are specified from the consecutively respective captured images including, for example, the captured image 252. Furthermore, the same direction need not be completely the same direction but may be a direction within a predetermined range regarded as the same direction. Furthermore, in addition to the bounding boxes, it may be possible to specify a group between the persons by detecting the orientation of the faces of the persons or closeness of the persons' feet from, for example, the skeleton information on the persons specified from the captured image.

Then, the persons and the basket determined to belong to the same group are regarded to belong to the same group even if, as illustrated on the right side of FIG. 8, the persons are located at separate positions in a different captured image 253. Accordingly, for example, as illustrated on the right side of FIG. 8, even if the person 150 enters a region 170 of a self-service checkout counter area in the captured image 253 in order to pay a bill of the commodity products to be purchased, the person 151 and the basket 160 located at a position away from the region 170 are associated with the person 150. Then, on the basis of the positional information on the person 150 and the bill payment terminal 400, the fraud detection apparatus 10 specifies the bill payment terminal 400 in which the person 150 pays a bill. Accordingly, the fraud detection apparatus 10 is able to further associate the bill payment terminal 400 in which the person 150 pays a bill or bill payment information that is related to the commodity products to be purchased and that have been input to the bill payment terminal 400 with the commodity products contained in the basket 160. In this way, finally, the person, the basket, the bill payment terminal 400, the bill payment information, the commodity products contained in the basket, and each of the captured images are associated with each other, so that, even if, for example, the commodity products are put into a bag and are accordingly separated from the basket, the fraud detection apparatus 10 is able to track the commodity products purchased by the person.

A description will be given here by referring back to FIG. 6. As illustrated on the lower side of FIG. 6, the bill payment information that is related to the commodity products to be purchased and that has been input to the bill payment terminal 400 and a captured image 250 that is captured by the camera device 200 are transmitted to the fraud detection apparatus 10. Then, as described above with reference to FIG. 8, the bill payment information and the basket that has been specified from the captured image are associated with each other, so that the fraud detection apparatus 10 is able to determine whether or not an unpaid commodity product is present on the basis of a difference between the number of commodity products that is contained in the basket and the number of paid commodity products that has been determined based on the bill payment information. Moreover, in the example illustrated in FIG. 6, the captured image 250 is an image in which only the basket has been captured, but may be an image in which a plurality of persons or baskets are captured. However, for example, it may be possible to install the camera device 200 such that the camera device 200 is able to capture an image of a basket from a position above a person's head and more clearly capture the content of the basket.

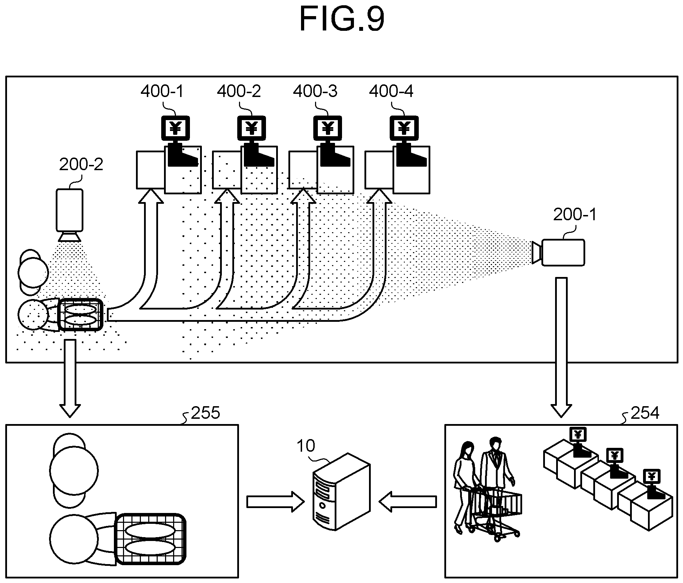

FIG. 9 is a diagram illustrating an example of a dedicated camera for capturing a basket according to the first embodiment. As illustrated in FIG. 9, in addition to the camera device 200-1 that captures a site in the vicinity of the self-service checkout counter area in which the bill payment terminal 400 is installed, the camera device 200-2 dedicated for capturing a basket from a position above a person's head is installed. The images captured by the camera device 200-1 and the camera device 200-2 have an association relationship based on, for example, the coordinates on the image, and the association relationship is stored in the fraud detection apparatus 10. As a result, for example, if a person enters the coordinate region that is located on a captured image 254 captured by the camera device 200-1 and that indicates an image capturing range of the camera device 200-2, the fraud detection apparatus 10 performs control such that the camera device 200-2 captures an image of the basket from a position above a person's head. A captured image 255 captured by the camera device 200-2 is transmitted to the fraud detection apparatus 10. As a result, the camera device 200 is able to more clearly capture an image of the basket captured at the time at which, for example, a person enters the self-service checkout counter area in order to pay a bill, and thus, the fraud detection apparatus 10 is able to specify the basket from the image in which the basket has been captured.

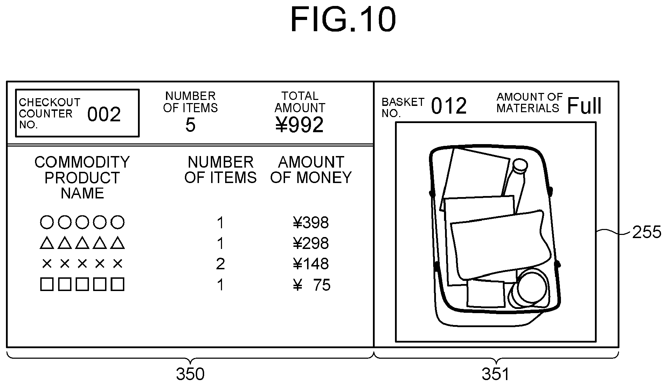

In the following, an alert that is notified to the store clerk terminal 300 and that is sent when, for example, it is determined by the fraud detection apparatus 10 that an unpaid commodity product is present will be specifically described. FIG. 10 is a diagram illustrating an example of an alert notification according to the first embodiment. FIG. 10 is a diagram illustrating an example of an alert that is notified to the store clerk terminal 300 and that is displayed on a display unit, such as the store clerk terminal 300.

As illustrated in FIG. 10, the alert may include a bill payment information display unit 350 and a basket image display unit 351. On the bill payment information display unit 350, for example, a checkout counter No. that uniquely indicates the bill payment terminal 400 and the bill payment information on the paid commodity products are displayed. Furthermore, on the basket image display unit 351, for example, the captured image 255 in which the basket associated with the paid commodity products has been captured is displayed. Furthermore, on the basket image display unit 351, the amount of materials of the commodity products that have been estimated from the captured image 255 by the fraud detection apparatus 10 and that are contained in the basket may be displayed. Furthermore, on the display of the alert, for example, if the number of items of the paid commodity products indicated by the bill payment information is less than a threshold that is set to the estimated amount of materials, it is possible to display information indicating that a scan omission of a commodity product occurs. Moreover, the alert is not limited to a case in which the fraud detection apparatus 10 detects a scan omission of a commodity product, but may be notified to the store clerk terminal 300 in the case where, for example, a payment has been made by the bill payment terminal 400. As a result, the store clerk is able to visually check the bill payment information or the basket image displayed on the bill payment information display unit 350 or the basket image display unit 351, respectively, via the store clerk terminal 300 and detect a scan omission of a commodity product.

### Flow of process

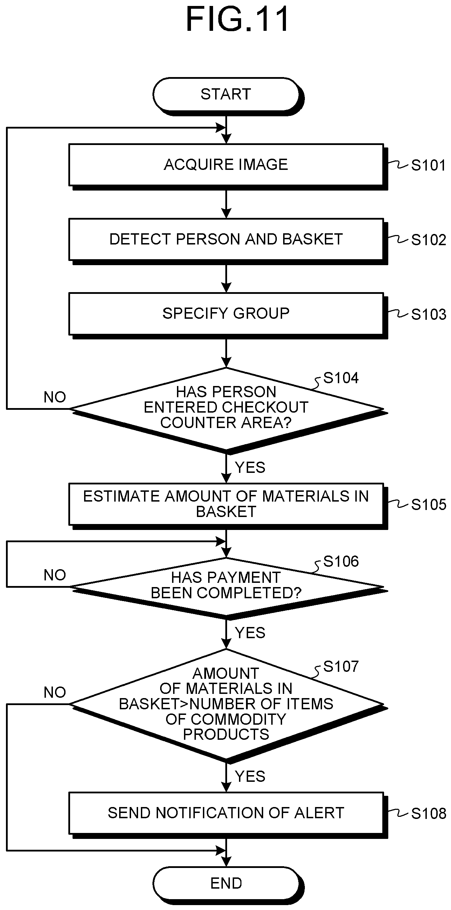

In the following, the flow of the fraud detection process performed by the fraud detection apparatus 10 will be described. FIG. 11 is a flowchart illustrating the flow of the fraud detection process according to the first embodiment. The fraud detection process illustrated in FIG. 11 may be performed, for example, at fixed intervals, or every time a captured image is received from the camera device 200.

First, as illustrated in FIG. 11, the fraud detection apparatus 10 acquires, from the image DB 31, a captured image of a predetermined image capturing range, such as the inside or the site of the store of the retail store, captured by the camera device 200 (Step S101). Moreover, in the fraud detection process illustrated in FIG. 11, in order to process the captured image captured by the camera device 200, in a precise sense, a monitoring video image in real time, the captured image is transmitted from the camera device 200 as needed, and is stored in the image DB 31.

Then, the fraud detection apparatus 10 detects, by using the existing object detection algorithm, persons and a shopping basket from the captured image acquired at Step S101 (Step S102).

Then, the fraud detection apparatus 10 specifies, on the basis of the position and the movement vector of each of the bounding boxes of the persons and the basket detected at Step S102, a group between persons and a group between the persons and the basket (Step S103).

Then, if the fraud detection apparatus 10 detects, from the captured image acquired at Step S101, that the person has entered the self-service checkout counter area (Yes at Step S104), the fraud detection apparatus 10 estimates the amount of materials of the commodity products that are associated with the person and that are contained in the basket (Step S105). In contrast, if it is not detected that the person enters the self-service checkout counter area (No at Step S104), the process is repeated from Step S101.

Then, the fraud detection apparatus 10 receives the bill payment information from the bill payment terminal 400 and determines whether or not a payment of the bill has been completed (Step S106). If the fraud detection apparatus 10 does not receive the bill payment information (No at Step S106), the fraud detection apparatus 10 waits to receive the bill payment information.

In contrast, if the bill payment information has been received (Yes at Step S106), the fraud detection apparatus 10 compares the amount of materials contained in the basket estimated at Step S105 to the number of items of the paid commodity products based on the bill payment information and determines whether or not a scan omission of a commodity product has occurred (Step S107).

Then, for example, if it is determined that the number of items of the paid commodity products is greater than or equal to the threshold that is set to the amount of materials contained in the basket and it is determined that a scan omission of a commodity product does not occur (No at Step S107), the fraud detection process illustrated in FIG. 11 is ended.

In contrast, for example, it is determined that the number of items of the paid commodity products is less than the threshold that is set to the amount of materials contained in the basket and it is determined that a scan omission of a commodity product occurs (Yes at Step S107), the fraud detection apparatus 10 notifies the store clerk terminal 300 of an alert (Step S108). After having performed the process at Step S108, the fraud detection process illustrated in FIG. 11 is ended.

### Effects

As described above, the fraud detection apparatus 10 specifies, from a captured image, a person who visits a store and a basket that is used by the person, specifies, on the basis of positional information on the person and positional information on each of a plurality of the bill payment terminals 400, the first bill payment terminal 400 in which the person pays a bill from among the plurality of the bill payment terminals 400, and associates first commodity products contained in the basket with the first bill payment terminal 400.

In this way, the fraud detection apparatus 10 associates each of the person who visits the store, the basket that is used by the person, the commodity products that are contained in the basket, and the bill payment terminal 400 in which the person pays the bill. As a result, in a system in which customers perform commodity product scans by themselves, the fraud detection apparatus 10 is able to improve the accuracy of detecting a scan omission of a commodity product.

Furthermore, the fraud detection apparatus 10 specifies, from the captured image, a first group constituted of a plurality of persons who visit a store, specifies, from the captured image, a basket that is used by the first group, specifies, on the basis of positional information on a first person who belongs to the first group and positional information on each of a plurality of the bill payment terminals 400, the first bill payment terminal 400 in which the first person pays a bill from among the plurality of the bill payment terminals 400, and associates the first commodity products that are contained in the basket carried by a second person who belongs to the first group with the first bill payment terminal 400.

In this way, the fraud detection apparatus 10 associates each of the persons who visit the store, the group between the persons, the basket that is used by the group, the commodity products that are contained in the basket, and the bill payment terminal 400 in which the person pays the bill. As a result, in a system in which customers perform commodity product scans by themselves, the fraud detection apparatus 10 is able to improve the accuracy of detecting a scan omission of a commodity product even when the person who pays the bill and the person who carries the shopping basket are different.

Furthermore, the fraud detection apparatus 10 determines whether or not an unpaid commodity product is present on the basis of a difference between the number of the first commodity products that are contained in the basket and the number of second commodity products that are input to the first bill payment terminal 400 and sends a notification of an alert when an unpaid commodity product is present.

As a result, in a system in which customers perform commodity product scans by themselves, the fraud detection apparatus 10 is able to send a notification to a store clerk when the fraud detection apparatus 10 detects a scan omission of a commodity product.

Furthermore, the fraud detection apparatus 10 receives bill payment information on the second commodity products from the first bill payment terminal 400. Furthermore, the process of determining whether or not the unpaid commodity product is present performed by the fraud detection apparatus 10 includes a process of determining whether or not the unpaid commodity product is present on the basis of the number of first commodity products and the number of paid items of the second commodity products based on the bill payment information.

As a result, in a system in which customers perform commodity product scans by themselves, the fraud detection apparatus 10 is able to further improve the accuracy of detecting a scan omission of a commodity product.

Furthermore, the process of receiving the bill payment information on the second commodity products performed by the fraud detection apparatus 10 includes a process of receiving, from the first bill payment terminal, the bill payment information on the second commodity products registered via a user terminal that is used to register, by a customer by himself or herself, commodity products to be purchased.

As a result, in a system in which customers perform commodity product scans by themselves, the fraud detection apparatus 10 is able to further improve the accuracy of detecting a scan omission of a commodity product.

Furthermore, the process of determining whether or not the unpaid commodity product is present performed by the fraud detection apparatus 10 includes a process of cutting out, from the image, an image of the basket as a first partial image, estimating, based on the first partial image, a first amount of materials of the first commodity products, and determining whether or not the unpaid commodity product is present on the basis of the first amount of materials and the number of second commodity products.

As a result, in a system in which customers perform commodity product scans by themselves, the fraud detection apparatus 10 is able to further improve the accuracy of detecting a scan omission of a commodity product.

Furthermore, the process of estimating the first amount of materials performed by the fraud detection apparatus 10 includes a process of estimating the first the amount of materials by inputting the first partial image to a machine training model that is generated by performing machine training by using the image of the basket as a feature amount and an amount of materials of the commodity products contained in the basket as a correct answer label.

As a result, in a system in which customers perform commodity product scans by themselves, the fraud detection apparatus 10 is able to further improve the accuracy of detecting a scan omission of a commodity product.

Furthermore, the process of specifying the first group performed by the fraud detection apparatus 10 includes a process of specifying the first group on the basis of a position and a movement vector of each of the bounding boxes of the plurality of persons included in the image.

As a result, in a system in which customers perform commodity product scans by themselves, the fraud detection apparatus 10 is able to further improve the accuracy of detecting a scan omission of a commodity product even when the person who pays the bill and the person who carries the shopping basket are different.

Furthermore, the process of sending the notification of the alert performed by the fraud detection apparatus 10 includes a process of notifying, as the alert, a store clerk terminal of an image of the first commodity products included in the captured image and the bill payment information on the second commodity products.

As a result, in a system in which customers perform commodity product scans by themselves, the fraud detection apparatus 10 is able to notify the store clerk of further detailed information for detecting a scan omission of a commodity product.

Furthermore, the process of specifying the basket from the image performed by the fraud detection apparatus 10 includes a process of specifying the basket from a second image captured by a second camera device when the person who enters a predetermined region that is included in the first image captured by the first camera device and that indicates an image capturing range of the second camera device has been specified.

As a result, in a system in which customers perform commodity product scans by themselves, the fraud detection apparatus 10 is able to acquire an image of the basket that is more clearly captured.

### System

The flow of the processes, the control procedures, the specific names, and the information containing various kinds of data or parameters indicated in the above specification and drawings can be arbitrarily changed unless otherwise stated. Furthermore, specific examples, distributions, numerical values, and the like described in the embodiment are only examples and can be arbitrarily changed.

Furthermore, the specific shape of a separate or integrated device is not limited to the drawings. In other words, all or part of the device can be configured by functionally or physically separating or integrating any of the units in accordance with various loads or use conditions. In addition, all or any part of each of the processing functions performed by the each of the devices can be implemented by a CPU and by programs analyzed and executed by the CPU or implemented as hardware by wired logic.

### Hardware

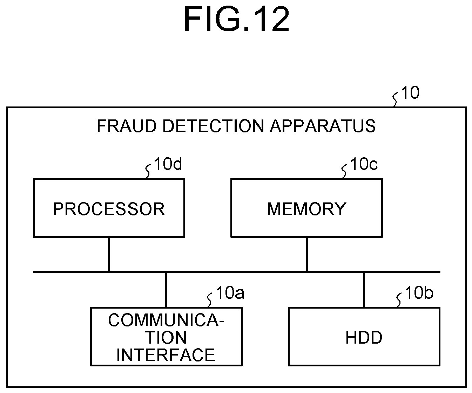

FIG. 12 is a diagram illustrating an example of a hardware configuration. As illustrated in FIG. 12, the fraud detection apparatus 10 includes a communication interface 10a, a hard disk drive (HDD) 10b, a memory 10c, and a processor 10d. Furthermore, each of the units illustrated in FIG. 12 is connected each other via a bus or the like. Moreover, FIG. 12 illustrates the hardware configuration of the fraud detection apparatus 10; however, the user terminal 100, the store clerk terminal 300, and the like may also have the same configuration as that of the fraud detection apparatus 10.

The communication interface 10a is a network interface card or the like and communicates with another server. The HDD 10b stores therein programs or the DB that operates the function illustrated in FIG. 4.

The processor 10d is a hardware circuit that operates the process that executes each of the functions described above in FIG. 4 or the like by reading the programs that execute the same process as that performed by each of the processing units illustrated in FIG. 4 from the HDD 10b or the like and loading the read programs in the memory 10c. In other words, the process executes the same function as that performed by each of the processing units included in the fraud detection apparatus 10. Specifically, the processor 10d reads, from the HDD 10b or the like, the programs having the same function as that performed by the specifying unit 41, the generating unit 42, the evaluating unit 43, the notifying unit 44, and the like. Then, the processor 10d executes the process for executing the same processes as those performed by the specifying unit 41 and the like.

In this way, the fraud detection apparatus 10 is operated as an information processing apparatus that executes a motion control process by reading and executing the programs that execute the same process as that performed by each of the processing units illustrated in FIG. 4. Furthermore, the fraud detection apparatus 10 can also implement the same function as that described above in the embodiment by reading the programs from a recording medium by a medium recording device and executing the read programs. Furthermore, the programs described in another embodiment are not limited to be executed by the fraud detection apparatus 10. For example, the present embodiment may also be similarly used in a case in which another computer or a server executes a program or in a case in which another computer and a server cooperatively execute the program with each other.

Furthermore, the programs that execute the same process as that performed by each of the processing units illustrated in FIG. 4 can be distributed via a network, such as the Internet. Furthermore, the programs can be executed by storing the programs in a recording medium that can be read by a computer readable medium, such as a hard disk, a flexible disk (FD), a CD-ROM, a magneto-optical disk (MO), a digital versatile disk (DVD), or the like, and read the programs from the recording medium by the computer.

According to an aspect of an embodiment, in a system in which customers perform commodity product scans by themselves, it is possible to improve the accuracy of detecting a scan omission of a commodity product.

## Claims

1. An information processing program that causes a computer(10) to execute a process comprising:
specifying, from a plurality of images taken by one or more camera devices, a person who visits a store and a first object that contains one or more first commodity products and is used by the person;(S102)
specifying, from the plurality of images, a location of the person in the store;
specifying, based on the location of the person and a location of each of a plurality of terminals(400) in the store, a first terminal(400) in which the person uses from among the plurality of terminals(400);
associating the one or more first commodity products contained in the first object with the first terminal(400);(S107) and
when receiving certificate information related to the one or more first commodity products from the first terminal(400), performing authentication processing of the one or more first commodity products contained in the first object by using the certificate information.

2. An information processing program that causes a computer to execute a process comprising:
specifying, from a captured image, a first group constituted of a plurality of persons who visit a store;(S103)
specifying, from the image, a second object that is used by the first group;(S102)
specifying, based on positional information on a first person who belongs to the first group and positional information on each of a plurality of terminals(400), a first terminal(400) in which the first person uses from among the terminals(400); and
associating first commodity products contained in the second object carried by a second person who belongs to the first group with the first terminal(400).(S107)

3. The information processing program according to claim 1 or 2, wherein the process further includes:
determining whether or not an unregistered commodity product is present based on a difference between the number of the first commodity products that are contained in the first object and the number of second commodity products that are input to the first terminal(400);(S107) and
sending a notification of an alert when the unpaid commodity product is present.(S108)

4. The information processing program according to claim 3, wherein the process further includes receiving certificate information on the second commodity products from the first terminal(400), wherein
the determining whether or not the unregistered commodity product is present includes determining whether or not the unregistered commodity product is present based on a difference between the number of the first commodity products and the number of registered items of the second commodity products based on the certificate information.

5. The information processing program according to claim 4, wherein the receiving the certificate information on the second commodity products includes receiving, from the first terminal(400), the certificate information on the second commodity products registered via a user terminal that is used to register, by a customer by himself or herself, commodity products to be purchased.

6. The information processing program according to claim 3, wherein
the determining whether or not the unregistered commodity product is present includes
cutting out, from the image, an image of an object as a first partial image,
estimating, based on the first partial image, a first amount of materials of the first commodity products, and
determining whether or not the unregistered commodity product is present based on the first amount of materials and the number of the second commodity products.

7. The information processing program according to claim 6, wherein
the estimating the first amount of materials includes estimating the first the amount of materials by inputting the first partial image to a machine training model that is generated by performing machine training by using the image of the object as a feature amount and an amount of materials of the commodity products contained in the basket as a correct answer label.

8. The information processing program according to claim 2, wherein the specifying the first group includes specifying the first group based on a position and a movement vector of each of bounding boxes of the plurality of persons included in the image.

9. The information processing program according to claim 3, wherein the sending the notification of the alert includes notifying, as the alert, a store clerk terminal(300) of an image of the first commodity products included in the captured image and certificate information on the second commodity products.

10. The information processing program according to claim 1, wherein the specifying the first object from the image includes specifying the first object from a second image captured by a second camera device when the person who enters a predetermined region that is included in a first image captured by a first camera device and that indicates an image capturing range of the second camera device has been specified.

11. An information processing method executed by a computer(10), the method comprising:
specifying, from a plurality of images taken by one or more camera devices, a person who visits a store and a first object that contains one or more first commodity products and is used by the person;(S102)
specifying, from the plurality of images, a location of the person in the store;
specifying, based on the location of the person and a location of each of a plurality of terminals(400) in the store, a first terminal(400) in which the person uses from among the plurality of terminals(400);
associating the one or more first commodity products contained in the first object with the first terminal(400);(S107) and
when receiving certificate information related to the one or more first commodity products from the first terminal(400), performing authentication processing of the one or more first commodity products contained in the first object by using the certificate information.

12. An information processing apparatus(10), comprising:
a memory(10c); and
a processor(10d) coupled to the memory(10c) and the processor(10d) configured to:
specify, from a plurality of images taken by one or more camera devices, a person who visits a store and a first object that contains one or more first commodity products and is used by the person;(S102)
specify, from the plurality of images, a location of the person in the store;
specify, based on the location of the person and a location of each of a plurality of terminals(400) in the store, a first terminal(400) in which the person uses from among the plurality of terminals(400);
associate, in the memory, the one or more first commodity products contained in the first object with the first terminal(400);(S107) and
when receiving certificate information related to the one or more first commodity products from the first terminal(400), perform authentication processing of the one or more first commodity products contained in the first object by using the certificate information.
